# EUROPEAN PATENT SPECIFICATION

(11) **EP 0 640 193 B1**
(45) Date of publication and mention of the grant of the patent: **24.01.1996**
(21) Application number: 93910234.9
(22) Date of filing: 19.05.1993
(51) Int. Cl.: F16H 1/22, B30B 11/24

(54) **TORQUE DISTRIBUTING DRIVE**
DREHMOMENTVERTEILENDER ANTRIEB
SYSTEME DE COMMANDE DE REPARTITION DE COUPLE

(30) Priority: 22.05.1992 GB 9210953
(43) Date of publication of application: 01.03.1995
(73) Proprietor: APV UK Plc, London SW1W OJR (GB)
(72) Inventor: HOBBS, John Edward, Freshford, Bath BA3 6DP (GB)
(74) Representative: Lomas, Geoffrey Michael
(86) International application number: GB9301027
(87) International publication number: WO9324767

(56) References cited:
- FR-A- 2 166 501
- FR-A- 2 208 779
- GB-A- 435 459
- US-A- 1 708 022
- US-A- 3 894 725

## Description

This invention relates to a torque distributing drive, and particularly, but not exclusively, to a torque distributing drive for driving a twin screw extruding machine.

Direct extrusion processes produce high extruder discharge pressures. This high pressure is generated from the extruder screws and typically is translated as an axial force back into a gearbox. The axial force is taken within the gearbox casing by a series of axial thrust bearings which can be arranged in varying configurations to suit the extruder application.

Twin screw extruders have limitations on their torque output, due to the closely spaced output shaft centres. This limits the shaft size, bearing size, and gear sizes that can be utilised. Also it is usual to drive such machines from a single motor into the gearbox input shaft.

The gear trains and lay shafts are usually arranged in such a manner, firstly to give a reduction in motor speed down to the required output speed, and secondly to split the single input drive into two output drives.

The complexity of such arrangements usually limits the maximum output torque, together with:
a) uneven torque distribution to either output shaft
b) differential torsional wind up between output shafts, which in turn gives
c) differential angular relationships between output shafts
d) low radial bearing life
e) high inertia gear systems.

According to the present invention, a torque distributing drive comprises four parallel drive shafts comprised by first and second input shafts and first and second output shafts, characterised by first and second separate pairs of transmission means, in use one transmission means of the first pair of transmission means coupling the first input shaft and the first output shaft at a pre-determined velocity ratio, and the other transmission means of the first pair of transmission means coupling the first input shaft and the second output shaft at a pre-determined velocity ratio, and one transmission means of the second pair of transmission means coupling the second input shaft and the first output shaft at a pre-determined velocity ratio, and the other transmission means of the second pair of transmission means coupling the second input shaft and the second output shaft at a pre-determined velocity ratio, such that said couplings at a pre-determined velocity ratio fix the velocity ratio between said output shafts.

Preferably each transmission means comprises a gear wheel which meshes with complementary gearing carried on the respective input shaft and output shaft coupled by said transmission means.

Preferably the axes of the two gear wheels of each of the pairs of gear wheels that meshes with the gearing carried on a respective output shaft are disposed in planes which intersect with each other at the axis of the output shaft at at least substantially 120°.

Most preferably the angle of intersection lies substantially in the range 140° - 160°.

Preferably the relative angular relationship of the output shafts is adjustable, and most preferably this is achieved using a right-handed helical gear and a left-handed helical gear as the complementary gearing carried on each input shaft, the input shafts being movable axially and one input shaft being lockable in an axial position to set the desired angular relationship of the output shafts.

For applications requiring low power, the drive is preferably provided by a single motor through a single input shaft of the drive.

For applications with extruding machines requiring cooling media to be passed through the extruder screw shafts, this is preferably supplied through the output shafts of the torque distributing drive.

A preferred embodiment of a torque distributing drive in accordance with the invention will now be described, by way of example only, with reference to the accompanying drawings, in which:
Figure 1 is a perspective view showing the two gear trains of the embodiment in relation to the input and output shafts;

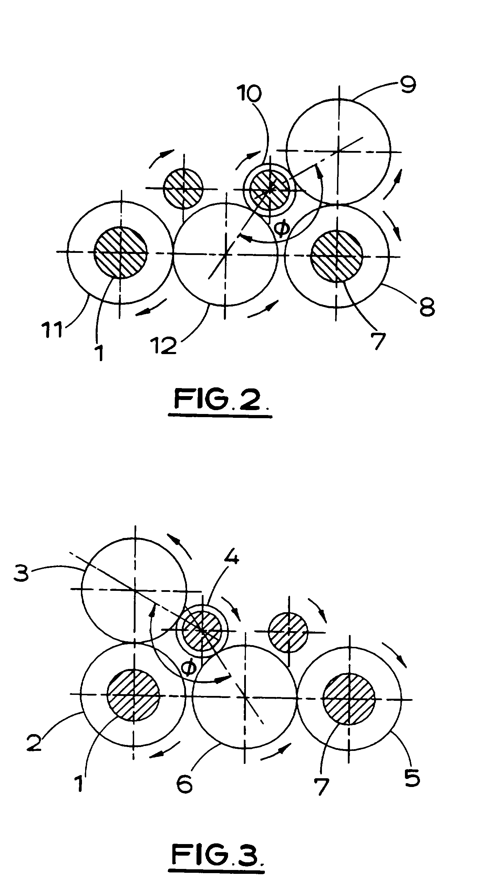

Figure 2 is an end view of the first gear train from the input shaft side of the drive; and
Figure 3 is an end view of the second gear train from the input shaft side of the drive;

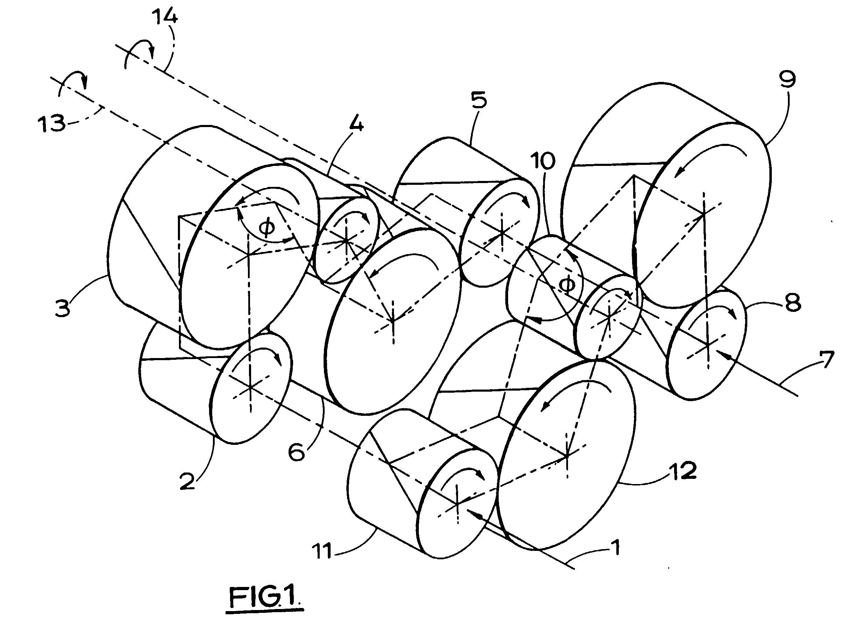

With reference to Figure 1, each input shaft 1, 7, is driven at high torque by an identical motor through an identical set of reduction gears (not shown).

Input shaft 1 has integral gears 2 and 11. Gear 2 drives an independent intermediate gear 3 which transmits torque to output shaft 13 via gear 4 which is integral with output shaft 13. Simultaneously gear 11 drives an independent intermediate gear 12 which transmits torque to output shaft 14 via gear 10 which is integral with output shaft 14.

Thus shaft 1 drives both output shafts 13 and 14 simultaneously.

Input shaft 7 has integral gears 5 and 8. Gear 5 drives an independent intermediate gear 6 which transmits torque to output shaft 13 via gear 4 which is integral with output shaft 13. Simultaneously gear 8 drives an independent intermediate gear 9 which transmits torque to output shaft 14 via gear 10 which is integral with output shaft 14.

Thus shaft 7 drives both output shafts 13 and 14 simultaneously.

The large angle φ shown in the drawings, which is typically about 154°, which represents the disposition of the pairs of intermediate gears 3, 6 and 9, 12 in relation to each respective output shaft, means that high torques can be applied to the output shafts with almost opposite reactions in each case. The resultant force gives very low bending stresses and bearing loads. Thus high torques can be transmitted without significant reduction in bearing lives.

As both motors drive both output shafts through identical gear layouts, the angular relationship between the output shafts is maintained under full load conditions. The disposition of the two gear trains enables both output shafts to be driven by one motor without adverse torque reactions or loss of angular relationship.

It is necessary at assembly to finely adjust the angular relationship of the two output shafts in relation to each other, that is to rotate the shafts relative to each other before fixing them in the desired relationship. This is achieved by using helical gearing, gears 5 and 8 on shaft 7 of opposite helix, and similarly gears 2 and 11 on shaft 1 are of opposite helix. Shaft 1 is then provided with a degree of axial float so that axial adjustment of shaft 7 causes opposite rotation of the output shafts until these are in the desired relationship, this being set by locking shaft 7 in its axial position.

Under certain process conditions, the extruder screws may demand an unequal torque distribution e.g. right-hand shaft 60% torque, left-hand shaft 40% torque. Under such conditions the differential torsional deflection between the gearbox output shafts is minimised due to the torque being provided equally by both motors.

Since torque is provided from two drive motors, the components in the drive trains are designed for half the torque that would be required for a single motor design of equivalent output torque. This gives lower mass gears and hence lower comparable drive inertia, which is beneficial in full speed overload conditions.

The axial thrust is bourne within the drive housing by a series of axial thrust bearings, not shown, which are arranged in various configurations to suit the extruder application.

In an alternative embodiment, not shown, cooling media may be provided for the extruder screw shafts through passageways inside the output shafts of the drive.

## Claims

1. A torque distributing drive comprising four parallel drive shafts comprised by first and second input shafts (1, 7) and first and second output shafts (13, 14) characterised by first and second separate pairs of transmission means (12, 3; 9, 6), in use one transmission means (3) of the first pair of transmission means (13, 3) coupling the first input shaft (1) and the first output shaft (13) at a pre-determined velocity ratio, and the other transmission means (12) of the first pair of transmission means (12, 3) coupling the first input shaft (1) and the second output shaft (14) at a pre-determined velocity ratio, and one transmission means (6) of the second pair of transmission means (9, 6) coupling the second input shaft (7) and the first output shaft (13) at a pre-determined velocity ratio, and the other transmission means (9) of the second pair of transmission means (9, 6) coupling the second input shaft (7) and the second output shaft (14) at a pre-determined velocity ratio, such that said couplings at a pre-determined velocity ratio fix the velocity ratio between said output shafts (13, 14).

2. A drive as claimed in claim 1 characterised in that each transmission means comprises a gear wheel (12, 3; 9, 6) which meshes with complementary gearing (11, 10; 2, 4; 8, 10; 5, 4) carried on the respective input shaft and output shaft (1, 14; 1, 13; 7, 14; 7, 13) coupled by said transmission means.

3. A drive as claimed in claim 2 characterised in that the axes of the two gear wheels of each of the pairs (3, 6; 9, 12) of gear wheels that meshes with the gearing (4, 10) carried on a respective output shaft (13, 14) are disposed in planes which intersect with each other at the axis of the output shaft at at least substantially 120°.

4. A drive as claimed in claim 3 characterised in that the angle of intersection lies substantially in the range 140° to 160°.

5. A drive as claimed in any of the preceding claims characterised in that the relative angular relationship of the output shafts (13, 14) is adjustable.

6. A drive as claimed in claim 5 characterised in that the relative angular relationship of the output shafts (13, 14) is adjustable using a right-handed helical gear (11, 8) and a left-handed helical gear (2, 5) as the complementary gearing carried on each input shaft (1, 7), the input shafts being movable axially and one input shaft (1, 7) being lockable in an axial position to set the desired angular relationship of the output shafts (13, 14).

7. A drive as claimed in any one of the preceding claims characterised in that it is coupled with a single motor through a single input shaft (1, 7) of the drive.

8. A twin screw extruding machine characterised by having screws which are respectively coupled to the output shafts of a torque distributing drive as claimed in any one of the preceding claims.

## Patentansprüche

1. Antrieb zur Drehmomentverteilung mit vier parallelen Antriebswellen bestehend aus einer ersten und zweiten Eingangswelle (1, 7) und einer ersten und zweiten Abgangswelle (13, 14), **gekennzeichnet** durch ein erstes und ein davon getrenntes zweites Paar Übersetzungseinrichtungen (12, 3; 9, 6), wobei im Betrieb eine Übersetzungseinrichtung (3) des erstes Paares Übersetzungseinrichtungen (13, 3) die erste Eingangswelle (1) mit der ersten Abgangswelle (13) mit vorgegebenem Übersetzungsverhältnis verbindet und die andere Übersetzungseinrichtung (12) des ersten Paares Übersetzungseinrichtungen (12, 3) die erste Eingangswelle (1) mit der zweiten Abgangswelle (14) mit vorgegebenem Übersetzungsverhältnis verbindet, und eine Übersetzungseinrichtung (6) des zweiten Paares Übersetzungseinrichtungen (9, 6) die zweite Eingangswelle (7) mit der ersten Abgangswelle (13) mit vorgegebenem Übersetzungsverhältnis verbindet, und die andere Übersetzungseinrichtung (9) des zweiten Paares Übersetzungseinrichtungen (9, 6) die zweite Eingangswelle (7) mit der zweiten Abgangswelle (14) mit vorgegebenem Übersetzungsverhältnis verbindet, und zwar in der Weise, daß die Verbindungen mit vorgegebenem Übersetzungsverhältnis das Geschwindigkeitsverhältnis zwischen den Abgangswellen (13, 14) festlegen.

2. Antrieb nach Anspruch 1, dadurch gekennzeichnet, daß jede Übersetzungseinrichtung ein Getrieberad (12, 3; 9, 6) aufweist, daß mit einem komplementären Getrieberadsatz verzahnt ist, der auf der jeweiligen Eingangswelle und Abgangswelle (1, 14; 1, 13; 7, 14; 7, 13), die durch die Übersetzungseinrichtung miteinander gekoppelt sind, gelagert ist.

3. Antrieb nach Anspruch 2, dadurch gekennzeichnet, daß die Achsen der beiden Getrieberäder jedes Paares (3, 6; 9, 12) von Getrieberädern, das mit dem auf einer jeweiligen Abgangswelle (13, 14) gelagerten Getrieberadsatz (4, 10) verzahnt ist, in Ebenen angeordnet sind, die sich miteinander schneiden, wobei die Achse der Abgangswelle im wesentlichen unter einem Winkel von mindestens 120° steht.

4. Antrieb nach Anspruch 3, dadurch gekennzeichnet, daß der Schnittwinkel im wesentlichen im Bereich zwischen 140° und 160° liegt.

5. Antrieb nach einem der vorhergehenden Ansprüche, dadurch gekennzeichnet, daß die relative Winkelbeziehung der Abgangswellen (13, 14) einstellbar ist.

6. Antrieb nach Anspruch 5, dadurch gekennzeichnet, daß die relative Winkelbeziehung der Abgangswellen (13, 14) unter Einsatz eines rechtsgängigen Schrägstirnrads (11, 8) eines eines linksgängigen Schrägstirnrads (2, 5) als komplementärem Getriebeteil, das auf jeder Eingangswelle (1, 7) gelagert ist, einstellbar ist, wobei die Eingangswellen (1, 7) axial beweglich sind und eine Eingangswelle (1, 7) in axialer Stellung so arretierbar ist, daß die gewünschte Winkelbeziehung der Abgangswellen (13, 14) eingestellt wird.

7. Antrieb nach einem der vorhergehenden Ansprüche, dadurch gekennzeichnet, daß er über eine einzelne Eingangswelle (1, 7) des Antriebs mit einem einzelnen Motor gekoppelt ist.

8. Doppelschrauben-Schneckenstrangpresse, dadurch gekennzeichnet, daß sie Schrauben aufweist, die jeweils mit den Abgangswellen eines Antriebs zur Drehmomentverteilung nach einem der vorhergehenden Ansprüche gekoppelt sind.

## Revendications

1. Transmission à répartition de couple comportant quatre arbres de transmission parallèles composés de premier et deuxième arbres d'entrée (1, 7) et de premier et deuxième arbres de sortie (13, 14), caractérisée par des première et deuxième paires séparées de moyens de transmission (12, 3; 9, 6), l'un des moyens de transmission (3) de la première paire de moyens de transmission (12, 3) reliant le premier arbre d'entrée (1) et le premier arbre de sortie (13) avec un rapport de vitesse prédéterminé, et l'autre moyen de transmission (12) de la première paire de moyens de transmission (12, 3) reliant le premier arbre d'entrée (1) et le deuxième arbre de sortie (14) avec un rapport de vitesse prédéterminé, et l'un des moyens de transmission (6) de la deuxième paire de moyens de transmission (9, 6) reliant le deuxième arbre d'entrée (7) et le premier arbre de sortie (13) avec un rapport de vitesse prédéterminé, et l'autre moyen de transmission (9) de la deuxième paire de moyens de transmission (9, 6) reliant le deuxième arbre d'entrée (7) et le deuxième arbre de sortie (14) avec un rapport de vitesse prédéterminé, de telle sorte que, lors de l'utilisation, lesdits accouplements avec un rapport de vitesse prédéterminé fixent le rapport de vitesse entre lesdits arbres de sortie (13, 14).

2. Transmission selon la revendication 1, caractérisée en ce que chacun des moyens de transmission comporte une roue dentée (12, 3; 9, 6) qui est en prise avec un pignon complémentaire (11, 10; 2, 4; 8, 10; 5, 4) porté par l'arbre d'entrée et l'arbre de sortie respectif (1, 14; 1, 13; 7, 14; 7, 13) reliés par lesdits moyens de transmission.

3. Transmission selon la revendication 2, caractérisée en ce que les axes des deux roues dentées de chacune des paires (3, 6; 9, 12) de roues dentées qui sont en prise avec le pignon (4, 10) porté par un arbre de sortie respectif (13, 14) sont disposés dans des plans qui se coupent au niveau de l'arbre de sortie sensiblement à 120°.

4. Transmission selon la revendication 3, caractérisée en ce que l'angle d'intersection se trouve dans une plage de sensiblement 140° à 160°.

5. Transmission selon l'une quelconque des revendications précédentes, caractérisée en ce que la relation angulaire relative des arbres de sortie (13, 14) est réglable.

6. Transmission selon la revendication 5, caractérisée en ce que la relation angulaire relative des arbres de sortie (13, 14) est réglable en utilisant un pignon hélicoïdal à droite (11, 8) et un pignon hélicoïdal à gauche (2, 5) comme pignon complémentaire porté par chaque arbre d'entrée (1,7), les arbres d'entrée étant axialement mobiles et un arbre d'entrée (1, 7) pouvant être bloqué dans une position axiale afin de déterminer la relation angulaire souhaitée des arbres de sortie (13, 14).

7. Transmission selon l'une quelconque des revendications précédentes, caractérisée en ce qu'elle est reliée à un unique moteur au moyen d'un unique arbre d'entrée (1, 7) de la transmission.

8. Machine d'extrusion à double vis, caractérisée en ce qu'elle a des vis qui sont reliées de manière respective à une transmission à répartition de couple selon l'une quelconque des revendications précédentes.
